# DEMANDE DE BREVET EUROPEEN

(11) **EP 4 304 106 A1**
(43) Date de publication de la demande: **10.01.2024**
(21) Numéro de dépôt: 23181388.2
(22) Date de dépôt: 26.06.2023
(51) Int. Cl.: H04B 7/185, H04B 7/204, H01Q 1/28

(54) **SYSTÈME DE RADIOCOMMUNICATIONS SATELLITAIRE MULTIFAISCEAUX PASSIF SANS REDONDANCE**

(30) Priorité: 07.07.2022 FR 2206930
(71) Demandeur: THALES, 92400 Courbevoie (FR)
(72) Inventeur: LE BOULCH, Didier, 31037 TOULOUSE Cedex 1 (FR); BOSSHARD, Pierre, 31037 TOULOUSE Cedex 1 (FR); VOISIN, Philippe, 31037 TOULOUSE Cedex 1 (FR)
(74) Mandataire: Atout PI Laplace

(57) **Abrégé**

L'invention concerne un système de radiocommunications satellitaire multifaisceaux comprenant :
- au moins un satellite ayant au moins un système antennaire multifaisceaux passif,
- au moins un terminal satellitaire,
- un allocateur de ressources configuré pour former un réseau régulier de spots satellitaires agencé selon une maille en forme de quadrilatères sur une zone géographique donnée, pour associer des ressources spectrales aux spots satellitaires, puis pour allouer des ressources spectrales aux terminaux satellitaires en fonction de leur position,
où l'allocateur de ressources est configuré pour, en cas de défaillance d'un spot satellitaire (701), étendre la zone de couverture des spots satellitaires (702, 703, 704, 705) adjacents au spot satellitaire défaillant de manière couvrir la surface qu'il occupe, et allouer de nouvelles ressources spectrales aux terminaux satellites du spot satellitaire défaillant en fonction de leur position.

L'invention concerne également un allocateur de ressources et le procédé correspondant.

## Description

### Domaine technique :

L'invention se situe dans le domaine des communications satellitaires, et porte plus particulièrement sur un système de radiocommunications satellitaire multifaisceaux large bande passif, c'est-à-dire sans redondance des circuits d'amplification, où la robustesse face aux pannes est supportée par les réseaux focaux des antennes, sur un allocateur de ressources pour réseau satellitaire et sur le procédé d'allocation de ressources satellitaires associé.

### Technique antérieure :

Les solutions de charge utile HTS (sigle anglais pour *High Throughput System,* ou système haut débit) ou V-HTS (sigle anglais pour *Very High Throughput System,* ou système très haut débit) peuvent être réalisées à partir d'antennes actives ou passives.

Certaines de ces solutions sont basées sur l'utilisation d'antennes actives, où la formation des faisceaux se réalise en utilisant tout ou partie des sources rayonnantes de l'antenne. Elles présentent des performances en retrait par rapport aux solutions basées sur l'utilisation d'antennes passives, pour lesquelles la formation de chaque faisceau est réalisée par une seule source rayonnante, en termes de directivité et de capacité de réutilisation des ressources. Cette baisse est intrinsèque aux performances atteignables avec les différentes optiques antennes (antenne active à réflecteur ou antenne réseau à rayonnement direct).

Dans les solutions impliquant des antennes actives, l'amplification est distribuée, c'est-à-dire que chaque élément rayonnant est associé à un amplificateur d'émission ou de réception et participe à la formation de l'ensemble des faisceaux produits par l'antenne, et ce avec ou sans optique réflecteur. Pour les systèmes avec optique réflecteur, celui-ci est :
- soit conformé de sorte que l'énergie associée à la tâche de diffraction d'un élément rayonnant soit étalée sur l'ensemble de la zone couverte par l'antenne. On parle alors d'AFSR (sigle anglais pour *Array-Fed-Shaped-Reflector),* et le réseau de sources est placé au point focal de l'antenne,
- soit la tâche de diffraction est étalée sur un ensemble d'éléments rayonnants par l'action d'un déplacement du réflecteur, de telle sorte que le réseau de source ne se situe plus dans le plan focal du réflecteur. On parle alors de DAFR (sigle anglais pour *Defocused Array Fed Reflector).*

L'étalement de l'énergie a pour conséquence des performances en retrait par rapport aux systèmes focalisants passifs, associant une source à un amplificateur redondé, par exemple de type FAFR (sigle anglais pour *Focal Array Fed Reflector).*

Cependant, un des avantages des solutions basées sur l'utilisation d'antennes actives réside en ce qu'elles ne nécessitent pas la mise en oeuvre de circuits de redondance, puisque la panne d'une chaîne radiofréquence (RF) se traduit seulement par une faible diminution locale des performances de l'antenne, pouvant être limitée à un seuil parfaitement acceptable. Cette panne n'entraîne pas de « trous » dans la couverture opérée par le satellite. Ainsi, il n'est pas nécessaire de redonder les chaînes RF (en anglais *RF front-end*)*,* ce qui permet de les implanter au plus près des ouvertures rayonnantes, et donc de minimiser de façon considérable les pertes RF liées à l'aménagement de boucles de redondance. Le gain de performance est de l'ordre de 2dB à 2,5dB en bande Ka par rapport aux solutions passives.

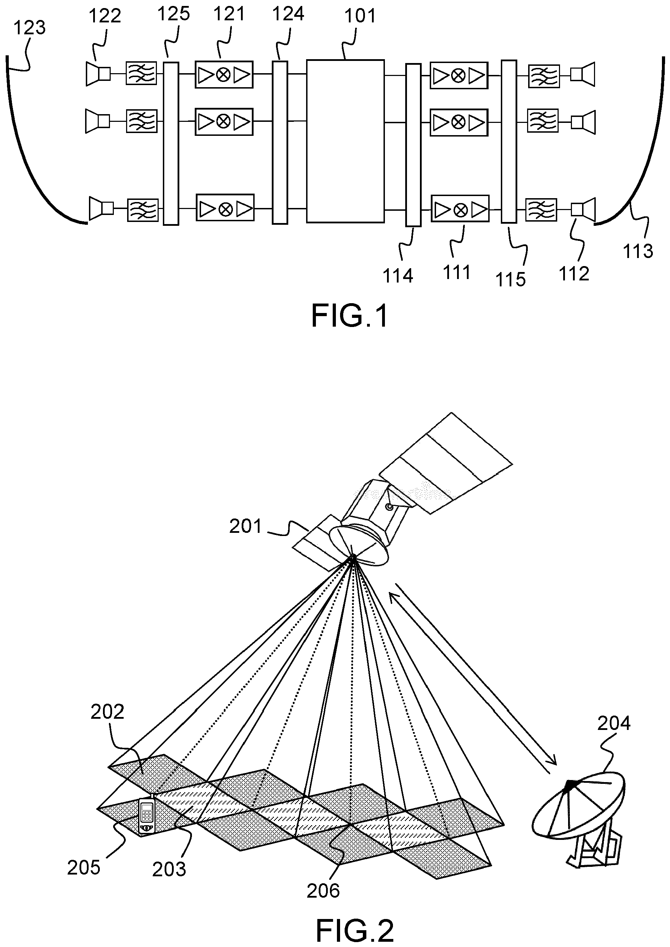

Les solutions de charge utile HTS et V-HTS basées sur l'utilisation d'antennes passives de type FAFR, pour lesquelles chaque spot satellitaire est associé à une source rayonnante distincte, présentent d'autres avantages et inconvénients. La figure 1 représente schématiquement les différents éléments d'une telle solution, dans le cas d'un satellite dont la charge utile est constituée d'un système antennaire d'émission et d'un système antennaire de réception distincts. La charge utile comprend classiquement un ensemble numérique 101 réalisant le routage des canaux fréquentiels et le traitement des signaux. Il est relié d'une part à une partie émission à travers des chaînes RF d'amplification 111 des signaux à émettre (aussi appelées sources) et des éléments rayonnants (ou cornets) 112, les éléments rayonnants illuminant un réflecteur parabolique 113. Les chaînes RF d'amplification 111 comprennent généralement des amplificateurs de puissance (en anglais HPA pour *High Power Amplifier)* sous la forme de tubes de puissance à ondes progressives (en anglais *Traveling-Wave Tube Amplifier* ou TWTA) ou des amplificateurs à l'état solide (en anglais *Solid State Power Amplifier ou* SSPA) associés ou non à des convertisseurs de fréquence. De manière à supplanter d'éventuelles défaillances des chaînes RF 111, celles-ci sont redondées. Leur nombre est donc supérieur au nombre de faisceaux formés. Elles sont associées à des circuits de redondance 114 et 115, de manière à pouvoir palier à d'éventuelles défaillances. De cette manière, la panne d'une chaîne RF n'entraîne pas de formation de « trou » dans la zone de couverture du satellite (perte du faisceau alimenté par les fonctions émission et/ou réception). Le principe est le même à réception, où les signaux réfléchis sur un réflecteur 123 sont acquis par des éléments rayonnants 122 puis traités par des chaînes radio 121 comprenant des amplificateurs faible bruit (en anglais *Low Noise Amplifier* ou LNA). Des circuits de redondance 124 et 125, comprenant des commutateurs électromécaniques ou à ferrite, permettent d'associer les différentes chaînes radio et sources.

De telles solutions présentent l'avantage d'offrir un très haut niveau de performances en termes de directivité antenne et de capacité de réutilisation des fréquences, mais la mise en place des circuits de redondance entraine un surdimensionnement de la charge utile et une complexification des guides d'ondes d'alimentation (utilisation d'anneaux de redondance), avec des impacts sur les pertes RF. L'introduction de circuits de redondance génère des longueurs de harnais importantes, ce qui, avec l'augmentation du nombre de chaînes RF et l'introduction de commutateurs, conduit à une augmentation massive du poids et de l'encombrement de la charge utile, ainsi qu'une augmentation du temps d'intégration et de vérification nécessaire à la validation de tous les chemins de données.

En résumé, les solutions de charges utiles basées sur des antennes passives offrent des performances élevées mais sont associées à des chaînes RF pénalisées en performance du fait de l'introduction de circuits de redondances. A l'inverse, les solutions de charges utiles basées sur des antennes actives permettent une utilisation optimum des chaînes RF mais présentent des performances en retrait.

Il existe donc un besoin pour une architecture alliant le meilleur des deux solutions, à savoir une solution à base d'antennes passives présentant des caractéristiques telles qu'il n'est pas nécessaire de redonder les chaînes RF des sections d'entrée et de sortie répéteur.

### Résumé de l'invention :

A cet effet, la présente invention décrit un système de radiocommunications satellitaire multifaisceaux comprenant :
- au moins un satellite ayant au moins un système antennaire multifaisceaux passif,
- au moins un terminal satellitaire,
- un allocateur de ressources configuré pour :
   ∘ former un réseau régulier de spots satellitaires sur une zone géographique donnée, ledit réseau de spot satellitaire étant agencé selon une maille régulière en forme de quadrilatères, et
   ∘ associer des ressources spectrales aux spots satellitaires de sorte que pour chaque spot satellitaire, les ressources spectrales qui lui sont attribuées diffèrent de celles attribuées aux spots satellitaires adjacents, puis
   ∘ allouer des ressources spectrales audit au moins un terminal satellitaire en fonction de sa position dans ledit réseau de spots satellitaires.

Dans le système de radiocommunications satellitaires selon l'invention, l'allocateur de ressources est configuré pour, en cas de défaillance d'un spot satellitaire, étendre la zone de couverture des spots satellitaires adjacents au spot satellitaire défaillant de manière couvrir la surface qu'il occupe, et d'allocation de nouvelles ressources spectrales aux terminaux satellites du spot satellitaire défaillant en fonction de leur position.

Avantageusement, l'allocateur de ressources est configuré pour associer des polarisations orthogonales à des spots satellitaires adjacents lorsque le réseau de spots est pleinement fonctionnel.

Dans le détail, l'extension de la zone de couverture des spots satellitaires adjacents au spot satellitaire défaillant comprend :
- une découpe de la surface du spot satellitaire défaillant en N sous-parties formées de manière à minimiser la distance par rapport aux spots satellitaires adjacents, avec N le nombre de spots satellitaires adjacents au spot satellitaire défaillant,
- une extension de la surface des spots satellitaires adjacents au spot satellitaire défaillant, de manière à couvrir la sous-partie la plus proche.

Selon un mode de réalisation d'un système de radiocommunications satellitaire multifaisceaux selon l'invention, le satellite comprend un système antennaire configuré pour assurer une fonction d'émission vers le ou les terminaux satellitaires, un système antennaire configuré pour assurer une fonction de réception depuis le ou les terminaux satellitaires, un système antennaire configuré pour assurer une fonction d'émission/réception avec le ou les terminaux satellitaires, ou un premier système antennaire configuré pour assurer une fonction d'émission vers le ou les terminaux satellitaires et un second système antennaire configuré pour assurer une fonction de réception depuis le ou les terminaux satellitaires.

Avantageusement, au moins une des antennes du système satellitaire est une antenne multi faisceaux où chaque faisceau est formé par une pluralité d'éléments rayonnants, dite antenne MFB.

Dans le détail, les éléments rayonnants de la ou des antennes MFB sont configurés pour permettre la transmission simultanée de signaux polarisés dans deux polarisations orthogonales, reliés par groupes à des sources radiofréquences de manière à ce que chaque groupe d'éléments rayonnants forme un faisceau satellitaire.

Avantageusement, lorsque l'antenne est une antenne MFB, des groupes d'éléments rayonnants formant des faisceaux de spots satellitaires adjacents en polarisation croisée ou des faisceaux de spots satellitaires distants associés à une même bande de fréquence et même polarisation sont reliés par des circuits de distribution passifs.

Selon un mode de réalisation d'un système de radiocommunications satellitaire multifaisceaux selon l'invention, au moins un des systèmes satellitaires comprend une pluralité d'antennes.

Selon un mode de réalisation d'un système de radiocommunications satellitaire multifaisceaux selon l'invention lorsqu'il comprend au moins deux satellites ayant chacun au moins un système antennaire multifaisceaux passif, la zone géographique est couverte par un premier système antennaire embarqué dans un premier satellite parmi les au moins deux satellites, et par un deuxième système antennaire embarqué dans un deuxième satellite parmi les au moins deux satellites.

Avantageusement, la maille du réseau de spots satellitaires est de forme carrée, rectangulaire ou losange.

Dans le détail, le au moins un système antennaire multifaisceaux du satellite comprend une antenne dont les sources sont reliées à des éléments rayonnants à travers des circuits de distribution sans mise en oeuvre de circuits de redondance.

L'invention décrit également un procédé d'allocation de ressources satellitaires, par un allocateur de ressources dans un réseau de radiocommunications satellitaire comprenant au moins un terminal satellitaire et au moins un satellite, ledit satellite ayant au moins un système antennaire multifaisceaux passif configuré pour couvrir une zone géographique donnée.

Le procédé décrit comprend :
- une étape initiale de formation d'un réseau de spots satellitaires agencés selon une maille régulière en forme de quadrilatère, d'association de ressources spectrales auxdits spots satellitaires de sorte que pour chaque spot satellitaire, les ressources spectrales qui lui sont attribuées diffèrent de celles attribuées aux spots satellitaires adjacents, et d'allocation de ressources spectrales audit au moins un terminal satellitaire en fonction de sa position dans le réseau de spots satellitaires,
- une étape réalisée lorsqu'un spot satellitaire est défaillant, d'extension de la zone de couverture des spots satellitaires adjacents au spot satellitaire défaillant de manière couvrir la surface qu'il occupe, et
- une étape d'allocation de nouvelles ressources spectrales aux terminaux satellitaires du spot satellitaire défaillant en fonction de leur position.

Enfin, l'invention décrit un allocateur de ressources dans un réseau de radiocommunications satellitaire comprenant au moins un terminal satellitaire et au moins un satellite, ledit satellite ayant au moins un système antennaire multifaisceaux passif configuré pour couvrir une zone géographique donnée, caractérisé en ce qu'il est configuré pour mettre en oeuvre un procédé d'allocation de ressources satellitaires tel que décrit précédemment.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
[Fig. 1] La figure 1 représente schématiquement les différents éléments d'une solution selon l'état de l'art de charge utile HTS ou V-HTS utilisant des antennes passives.
[Fig. 2] La figure 2 représente schématiquement un système de radiocommunications satellitaire selon l'état de l'art, dans lequel peut être mise en oeuvre l'invention.
[Fig. 3] La figure 3 présente schématiquement le principe de fonctionnement des antennes passives à plusieurs sources par faisceau, ou antennes MFB.
[Fig. 4] La figure 4 donne un exemple de réseau de spots satellitaires défini selon une maille carrée, utilisable dans un système de radiocommunications satellitaire multifaisceaux selon l'invention.
[Fig. 5] La figure 5 donne un exemple de réseau de spots satellitaires défini selon une maille rectangulaire, utilisable dans un système de radiocommunications satellitaire multifaisceaux selon l'invention.
[Fig. 6a] La figure 6a décrit la configuration permettant d'obtenir un réseau de spots satellitaires selon une maille en forme de losanges.
[Fig. 6b] La figure 6b donne un exemple de réseau de spots satellitaires défini selon une maille en losanges, utilisable dans un système de radiocommunications satellitaire multifaisceaux selon l'invention.
[Fig. 7] La figure 7 illustre la manière dont l'invention permet de répondre aux problèmes de pannes de faisceaux, sur un réseau de mailles carrées limité à cinq mailles.
[Fig. 8] La figure 8 illustre la manière dont l'invention permet de répondre aux problèmes de pannes de faisceaux, sur un réseau de mailles losanges limité à cinq mailles.
[Fig. 9a] La figure 9a représente des courbes d'iso niveau des faisceaux formant les spots satellitaires dans un réseau organisé selon une maille carrée.
[Fig. 9b] La figure 9b représente un exemple de niveau de puissance associé à un faisceau satellitaire.
[Fig. 10a] La figure 10a illustre une application concrète de la mise en oeuvre d'un système satellitaire selon l'invention, en fonctionnement nominal.
[Fig. 10b] La figure 10b illustre une application concrète de la mise en oeuvre d'un système satellitaire selon l'invention, en fonctionnement dégradé où la moitié des faisceaux sont défaillants.
[Fig. 11] La figure 11 est un diagramme représentant les différentes étapes d'un procédé d'allocation de ressources spectrales dans un système satellitaire multifaisceaux selon l'invention.

Des références identiques peuvent être utilisées dans des figures différentes lorsqu'elles désignent des éléments identiques ou comparables.

### Description détaillée :

La figure 2 représente schématiquement un système de radiocommunications satellitaire dans lequel peut être mise en oeuvre l'invention. Il comprend un satellite 201 avec un ou plusieurs systèmes antennaires permettant de couvrir une zone géographique de service donnée en générant un grand nombre de faisceaux afin de former des spots satellitaires tels que les spots 202 et 203. Selon le mode de réalisation, le système antennaire peut être formé d'une ou plusieurs antennes passives. Dans l'exemple de la figure 2, et à titre illustratif seulement, la zone géographique de service considérée est couverte par onze spots satellitaires agencés selon une maille de forme carrée. La notion de spot satellitaire est une représentation fonctionnelle correspondant à une répartition des ressources spectrales au sol. Les mailles carrées comportent des points quadruples tels que le point 206, à l'intersection de contours iso roll-off de quatre spots satellitaires adjacents. L'invention s'applique dans le cadre de spots satellitaires formés selon un pavage en maille régulières ayant une forme de quadrilatères, comme par exemple des carrés, des rectangles ou des losanges, dès lors que pour chaque spot satellitaire, des ressources spectrales distinctes (canal fréquentiel ou polarisation) sont attribuées à ce spot et aux spots satellitaires ayant un bord adjacent. Le schéma utilisé dans la suite de la description est le schéma utilisé dans la quasi-totalité des systèmes satellitaires, où un spot satellitaire est environné par des spots en contre-polarisation. Cependant, l'invention s'applique de manière identique dans le cas où chaque spot et ses quatre voisins ont la même polarisation et des fréquences distinctes.

La forme de la maille du réseau de spots satellitaires est à l'image du réseau focal, c'est-à-dire qu'elle dépend de la forme et du positionnement des ouvertures rayonnantes de l'antenne satellite et des caractéristiques des faisceaux formés, en particulier le roll-off. Une maille carrée peut être obtenue à l'aide d'une ou plusieurs antennes SFB (acronyme anglais pour *Single Feed per Beam,* ou source unique par faisceau) ou MFB (acronyme anglais pour *Multiple Feed per Beam,* ou sources multiples par faisceau) dont les éléments rayonnants sont agencés selon une maille carrée. Un réseau de spots satellitaires agencés selon une maille rectangulaire ou hexagonale peut être obtenu à l'aide d'une ou plusieurs antennes MFB dont les ouvertures rayonnantes sont agencées selon une maille hexagonale.

Un allocateur de ressources 204, relié au satellite par une liaison de télécommande/télémesure, positionné à l'intérieur ou à l'extérieur de la zone géographique couverte, est configuré pour :
- diviser la zone géographique de service en un réseau de spots satellitaires formant une maille régulière, en fonction de la configuration du système antennaire,
- attribuer à chaque spot satellitaire des ressources spectrales spécifiques (bande de fréquence et état de polarisation) en optimisant la répartition de la ressource spectrale, et
- attribuer des ressources spectrales aux terminaux satellitaires 205 en fonction de leur position dans le réseau de spots satellitaires.

L'optimisation de l'attribution des ressources spectrales consiste à maximiser la distance entre des spots satellitaires associés aux mêmes ressources spectrales, de manière à éviter les interférences. A titre d'illustration, dans l'exemple de la figure 2, les spots satellitaires foncés, tel que le spot satellitaire 202, sont associés à un premier état de polarisation, tandis que les spots satellitaires clairs, tel que le spot satellitaire 203, sont associés à un deuxième état de polarisation orthogonal au premier. Ces polarisations sont généralement des polarisations rectilignes ou circulaires. Les faisceaux utilisant la même polarisation se répartissent la bande de fréquence disponible en la découpant en sous-bandes, et en maximisant la distance entre deux spots satellitaires utilisant la même sous-bande de fréquences. Ce fonctionnement est bien connu de l'homme du métier, et fait l'objet de nombreux standards de communications satellitaires.

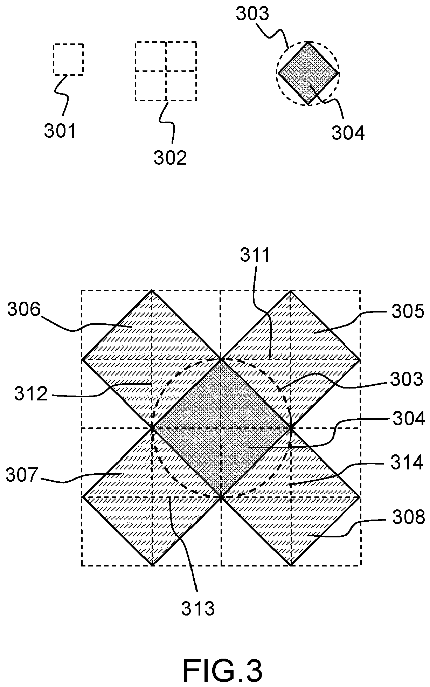

Des structures d'antennes multifaisceaux passives MFB sont décrites par exemple dans les brevets EP 2.669.138 B1 et EP 3.082.275 B1. Le principe consiste ici à former des faisceaux à partir de quatre éléments rayonnants reliés à une même chaîne d'amplification, en utilisant des cornets bipolarisation. On parle alors d'antenne MFB, par opposition aux antennes SFB où une source est associée à un élément rayonnant. D'autres configurations sont possible, par exemple en reliant 2 éléments rayonnants par source, 3 éléments rayonnants par source, 16 éléments rayonnantes par source, etc... Par la suite, on prendra comme exemple des regroupements d'éléments de rayonnants par paquets de quatre, à titre d'illustration uniquement, l'invention s'appliquant indépendamment de la taille des regroupements. L'avantage des antennes MFB par rapport aux antennes SFB est qu'elles présentent de très hautes propriétés de directivité et donc de capacité de réutilisation des ressources spectrales, ce qui permet de densifier le réseau. Le principe de fonctionnement des antennes multifaisceaux passives MFB et un exemple de forme des spots satellitaires correspondants sont décrits à la figure 3, dans le cadre d'une antenne pour laquelle les éléments rayonnants sont des cornets d'ouverture carrée disposés selon une maille carrée.

Les antennes MFB utilisent des éléments rayonnants bipolarisation, aussi appelées cornets ou duplexeurs de polarisation (en anglais *OrthoMode Transducer,* OMT), associés par groupes d'éléments rayonnants adjacents, quatre dans l'exemple, reliés à une même chaîne RF d'émission ou de réception de sorte qu'ils forment ensemble un faisceau couvrant un spot satellitaire. La référence 301 désigne la projection sur la couverture au sol du faisceau formé par un élément rayonnant carré, la référence 302 représente la projection sur la couverture au sol d'un groupe d'éléments rayonnants adjacents. Dans l'exemple de la figure 3, le cornet est carré, ce qui est l'agencement optimal pour un réseau de spots satellitaires agencé selon une maille carrée, mais d'autres formes sont possibles. Les éléments rayonnants adjacents d'une antenne MFB forment un faisceau 303 couvrant un spot satellitaire 304 dont la forme est choisie en fonction de la configuration de l'antenne. La référence 303 représente un isocontour du faisceau. Chaque élément rayonnant participe à la formation de deux faisceaux adjacents dans des polarisations différentes. Les carrés 311, 312, 313 et 314 représentent la projection de quatre éléments rayonnants de l'antenne MFB sur la couverture au sol. Le faisceau 303 résulte de la contribution de ces quatre éléments rayonnants dans la polarisation P1. Ces éléments rayonnants contribuent également chacun à la formation d'un deuxième spot dans la polarisation orthogonale P2. Par exemple, l'élément rayonnant 311 participe à la formation du spot 305, l'élément rayonnant 312 participe à la formation du spot 306, etc... Les spots satellitaires ayant un bord commun sont donc nécessairement associés à des polarisations orthogonales. Les sommets des spots satellitaires, ou points quadruples, correspondent aux points d'intersection des iso contours des faisceaux adjacents. A l'exception des bords du réseau, chaque spot satellitaire est entouré par quatre spots satellitaires adjacents associés à la polarisation orthogonale. A noter que l'invention s'applique également dans le cas d'une antenne SFB où tous les spots satellitaires utilisent la même polarisation, sous réserve que chaque spot satellitaire et ses quatre spots voisins emploient des bandes de fréquences différentes.

Sur la figure 3, une unique antenne MFB assure la couverture de l'ensemble de la zone de manière à avantager la définition de spots satellitaires carrés, en émission, en réception ou en émission/réception. D'autres mises en oeuvre sont possibles pour obtenir un réseau de spots satellitaires dont la maille a une forme de quadrilatère, et où les spots satellitaires ayant un bord adjacent sont dans des polarisations orthogonales. Par exemple, un réseau de spots satellitaires définis selon une maille carrée peut être obtenu grâce à un système satellitaire composé de deux antennes SFB associées chacune à un état de polarisation afin d'assurer ensemble une couverture complète de la zone géographique, ou par des systèmes antennaires complémentaires embarqués sur deux satellites différents.

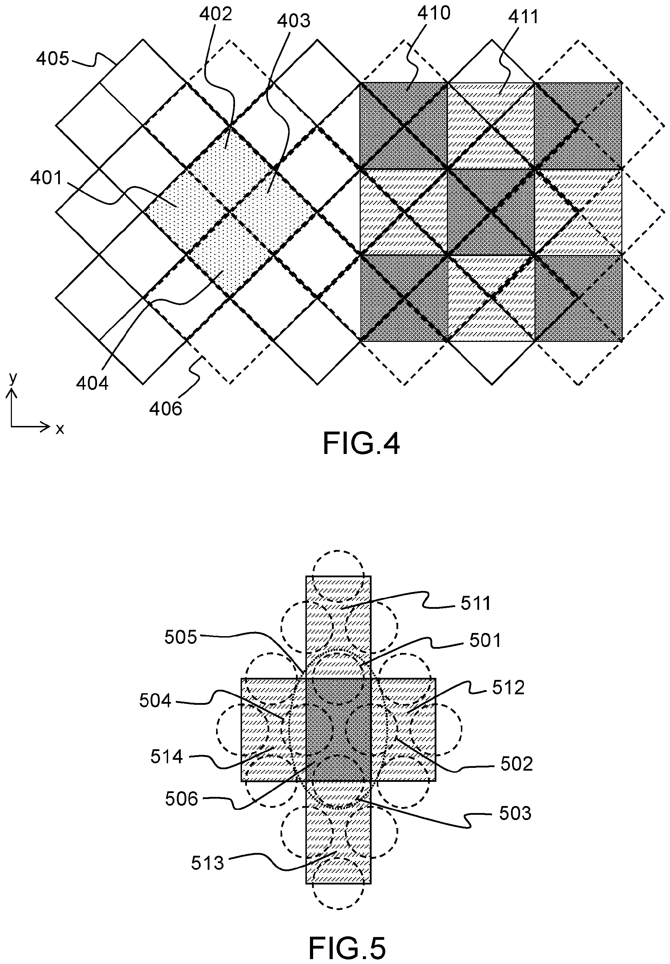

La figure 4 représente un exemple de réseau de spots satellitaires défini selon une maille carrée par un allocateur de ressources, adapté pour la mise en oeuvre d'un système de radiocommunications satellitaires selon l'invention. Le réseau de spots satellitaires est formé à partir d'un système antennaire composé de deux antennes MFB. Les deux antennes ont des éléments rayonnants bi-polarisation sous la forme de cornets carrés. Les éléments rayonnants sont, dans cet exemple, reliés par groupes de quatre pour former les faisceaux de l'antenne, mais d'autres configurations sont possibles. Sur la figure 4, les zones 401, 402, 403 et 404 correspondent à la projection au sol des iso-contours de quatre éléments rayonnants reliés à la même source RF d'une antenne satellite. Les carrés en traits pleins, comme le carré 405, représentent les projections de groupes d'éléments rayonnants de la première antenne, et ceux en tirets, comme le carré 406, représentent les projections de groupes d'éléments rayonnants de la deuxième antenne. Chaque antenne est configurée de manière à former des faisceaux adjacents dans une seule direction, dans l'exemple la direction y. Ainsi, les éléments rayonnants correspondant aux iso contours 402 et 406 participent chacun à la formation de faisceaux dans des polarisations croisées pour deux spots adjacents. Dans la direction x, les spots adjacents sont formés par des faisceaux provenant de chaque antenne alternativement, de sorte que les éléments rayonnants 401 et 403 ne participent chacun qu'à la formation du faisceau d'un seul spot satellitaire. Les spots satellitaires résultant de cette configuration de système antennaire sont représentés par exemple en 410 pour la première polarisation et en 411 pour la deuxième polarisation. A l'exception des bords du réseau, chaque spot satellitaire est entouré par quatre spots satellitaires adjacents associés à la polarisation orthogonale.

Les figures 3 et 4 représentent deux modes de réalisation différents permettant d'obtenir une couverture de zone géographique selon une maille carrée, avec des spots adjacents associés à des polarisations adjacentes, à partir d'une ou deux antennes MFB.

L'utilisation d'une pluralité d'antennes, SFB ou MFB, pour former la couverture de la zone géographique permet de mieux maîtriser le roll-off (c'est-à-dire la variation du gain entre le centre du spot et le bord du spot) au niveau des points quadruples, et donc de densifier le réseau de spots satellitaires.

La figure 5 représente un exemple de mise en oeuvre d'une antenne MFB permettant de couvrir l'ensemble d'une zone géographique d'intérêt avec une maille de forme rectangulaire et des spots adjacents en polarisation croisée. Une telle antenne est adaptée pour la mise en oeuvre d'un système de radiocommunications satellitaire selon l'invention. Les ronds en pointillés, comme les ronds 501 à 504, représentent les iso-contours des faisceaux formés par les éléments rayonnants de l'antenne. Ces éléments rayonnants sont ici des cornets d'ouverture circulaire ou hexagonale, disposés selon un agencement hexagonal. Dans l'exemple, chaque élément rayonnant est configuré pour permettre la transmission simultanée de deux signaux dans des polarisations croisées. Ils sont reliés par groupes à des mêmes chaînes radio d'émission ou de réception, de sorte que quatre éléments rayonnants adjacents contribuent ensemble à la formation d'un même faisceau. Par exemple, les éléments rayonnants formant les faisceaux des iso contours 501 à 504 contribuent ensemble à la formation du faisceau 505. Le pavage optimal pour cette disposition est un pavage de forme rectangulaire, comme le spot satellitaire 506 dans une première polarisation et les spots satellitaires adjacents 511 à 514 dans la polarisation orthogonale. Chaque élément rayonnant contribue en outre à la formation d'un spot adjacent au spot 506 dans la polarisation orthogonale : par exemple, l'élément rayonnant formant le faisceau correspondant à l'iso contour 501 contribue également à la formation du spot 511 dans la polarisation croisée. Il en est de même pour l'élément rayonnant à l'origine du faisceau 502 avec le spot 512, etc... Les sommets des spots satellitaires, ou points quadruples, correspondent aux points d'intersection des iso contours des faisceaux adjacents. A l'exception des bords du réseau, chaque spot satellitaire est entouré par quatre spots satellitaires adjacents associés à la polarisation orthogonale.

Sur la figure 5, une unique antenne MFB (en émission, en réception ou en émission/réception) assure la couverture de l'ensemble de la zone de manière à avantager la définition de spots satellitaires rectangulaires. Cependant, d'autres mises en oeuvre sont possibles, par exemple en utilisant un système satellitaire comprenant deux antennes MFB configurées pour réaliser chacune la couverture de la moitié de la zone géographique, de manière comparable à ce qui a été illustré en figure 4 pour un pavage de forme carrée.

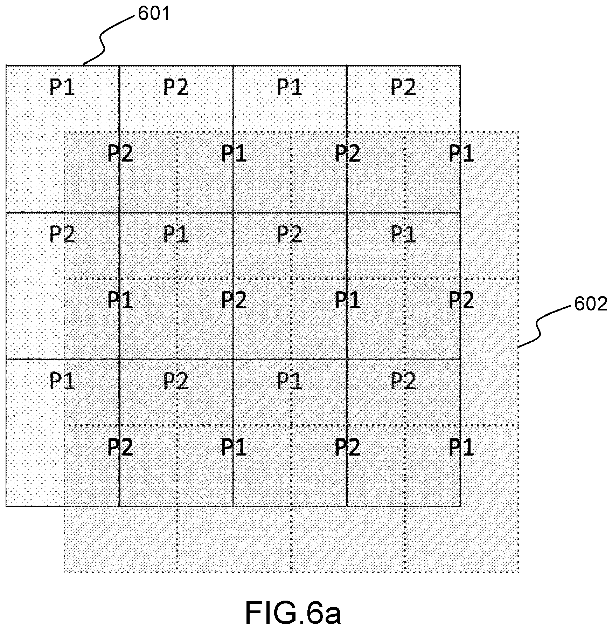

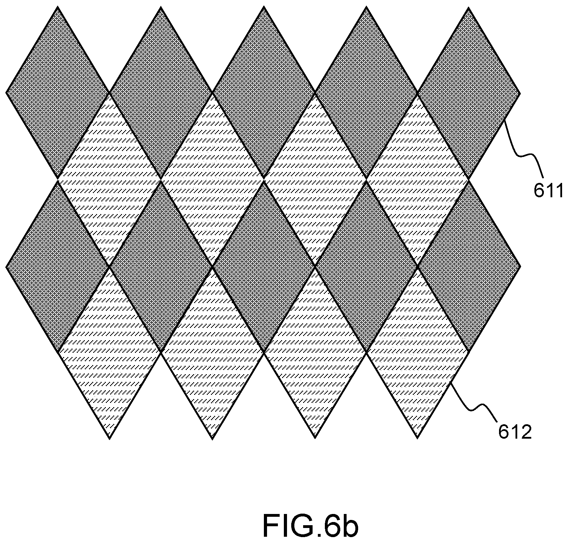

Il est également possible de superposer deux pavages rectangulaires sur les signaux transmis par deux antennes distinctes, embarquées ou non sur le même satellite, pour former un pavage de spots ayant la forme de losanges, comme représenté aux figures 6a et 6b.

Sur la figure 6a, la référence 601 désigne une maille rectangulaire de spots satellitaires couvrant une zone géographique donnée, tel que décrit et représenté à la figure 5. Un tel pavage peut être obtenu en utilisant une ou plusieurs antennes MFB. La référence 602 désigne une seconde maille rectangulaire de spots satellitaires. Les spots des deux mailles 601 et 602 sont de tailles identiques. Les polarisations des spots satellitaires sont désignées par P1 (polarisation 1) et P2 (polarisation 2), P1 et P2 étant des polarisations orthogonales.

Les deux systèmes satellitaires permettant la mise en oeuvre des deux pavages 601 et 602 sont configurés de sorte que les mailles présentent un décalage d'une demi-maille. Le pavage optimal résultant est donné à la figure 6b. Il s'agit d'un pavage selon une maille en forme de losanges, où chaque spot satellitaire a pour spot adjacent un spot associé à la polarisation croisée. Les spots satellitaires en fond grisé, tel que le spot satellitaire 611, utilisent la polarisation P1, tandis que les spots satellitaires en fond rayé, tel que le spot satellitaire 612, utilisent la polarisation croisée P2. A l'exception des bords du réseau, chaque spot satellitaire est entouré par quatre spots satellitaires adjacents associés à la polarisation orthogonale. Un tel maillage convient pour la mise en oeuvre d'un procédé d'allocation de ressources satellitaires selon un mode de réalisation de l'invention.

La superposition de deux maillages rectangulaires ou carrés permet donc de produire un maillage en forme de losanges, avec un doublement du nombre de spots satellitaires et une gestion optimale de la performance en particulier aux points correspondant aux points quadruples des maillages rectangulaires/carrés. Les deux maillages peuvent être mis en oeuvre par un système satellitaire comprenant deux antennes MFB, ou par deux systèmes satellitaires embarqués sur deux satellites distincts ayant chacun une antenne MFB. Ainsi, un premier satellite peut être lancé de manière à couvrir la zone géographique par un maillage de spots satellitaires rectangulaires, puis un deuxième satellite peut être lancé plus tard pour apporter le système antennaire supplémentaire permettant de couvrir la zone géographique par un maillage de spots satellitaires en forme de losanges, afin de densifier le réseau.

L'invention porte sur un système de radiocommunications mettant en oeuvre un système antennaire multifaisceaux passif, c'est-à-dire un système antennaire multifaisceaux dans lequel les chaînes d'amplification sont directement reliées aux éléments rayonnants, sans circuits de redondance. Le système antennaire a donc des performances optimales, ainsi qu'une bonne disponibilité et une charge utile réduite par rapport aux systèmes antennaires multifaisceaux actifs. Dans le système de radiocommunications selon l'invention, la défaillance d'un faisceau donne lieu à un réagencement de la structure du réseau, en lien avec la configuration du système antennaire.

Le procédé selon l'invention est mis en oeuvre dans un système de radiocommunications satellitaire multifaisceaux tel que celui décrit à la figure 2, qui comprend un ou plusieurs satellites (201), chaque satellite pouvant avoir un système antennaire d'émission et/ou un système d'antennaire de réception, ou un système antennaire d'émission/réception. La distinction entre système satellitaire d'émission et système satellitaire de réception est avantageuse car elle permet de mieux maîtriser la puissance des faisceaux, en particulier aux points quadruples, puisque les communications satellitaires montantes et descendantes utilisent des bandes de fréquences distinctes.

Le système de radiocommunications satellitaire comprend également un ou plusieurs terminaux satellitaires 205 et un allocateur de ressources 204.

Dans le système de radiocommunications satellitaires selon l'invention, au moins un des systèmes antennaires et l'allocateur de ressources sont configurés pour former un réseau régulier de spots satellitaires sur une zone géographique donnée, selon une maille régulière en forme de quadrilatère (carré, rectangle ou losange), comme décrit aux figures 3 à 6b. L'allocateur de ressources est configuré pour associer des ressources spectrales aux spots satellitaires, de sorte que des spots satellitaire adjacents, c'est-à-dire des spots satellitaires ayant des bords communs, soient associés à des polarisations orthogonales, comme décrit aux figures 3 à 6b, ou à ce que pour chaque spot, des bandes de fréquences distinctes soient attribuées au spot et à ses quatre voisins. Des bandes de fréquence sont également associées aux spots satellitaires, en veillant tant que possible à maximiser la distance entre des spots satellitaires associés aux mêmes bandes de fréquences. L'allocateur de ressources est également configuré pour allouer aux terminaux satellitaires des ressources spectrales (bande de fréquence et polarisation) en fonction de leurs positions dans le réseau de spots satellitaires.

Le système de radiocommunications satellitaires selon l'invention a pour particularité que l'allocateur de ressources est configuré pour modifier la maille du réseau de spots satellitaires à chaque défaillance d'un spot satellitaire. En cas de défaillance d'un spot satellitaire, il étend la zone de couverture des spots satellitaires adjacents au spot satellitaire défaillant, de manière couvrir la surface qu'il occupait précédemment, et alloue de nouvelles ressources spectrales aux terminaux satellites du spot satellitaire défaillant. On entend par défaillance d'un spot satellitaire par exemple une panne sur la chaîne d'amplification RF associée au faisceau couvrant le spot. Le système antennaire étant un système passif, dans un système de radiocommunications satellitaire sans redondance selon l'état de l'art, une telle panne entraine nécessairement un trou dans la couverture du satellite.

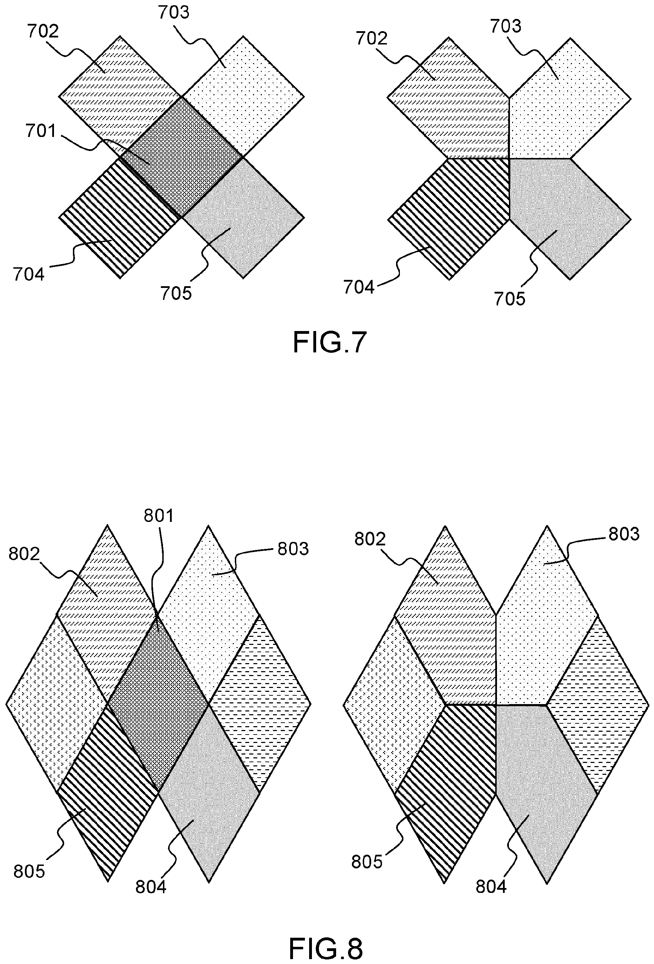

La figure 7 illustre la manière dont le réseau de spots satellitaires est modifié par l'allocateur de ressources selon l'invention dans le cas où un spot satellitaire est défaillant. L'exemple est donné dans un réseau de spots satellitaires ayant une maille carrée, limité dans cet exemple à cinq spots.

La gauche de la figure 7 représente un réseau réduit de spots satellitaires en fonctionnement nominal. Il comprend ici cinq spots satellitaires 701 à 705, associés des ressources spectrales par l'allocateur de ressources de sorte que des spots satellitaires adjacents utilisent des polarisations orthogonales. En désignant P₁ et P₂ des polarisations orthogonales, et pour un schéma de coloration à quatre bandes de fréquences F₁ à F₄, soit un schéma de coloration à N=8 couleurs, on peut par exemple avoir les associations suivantes :
- spot satellitaire 701 : (F₁, P₁),
- spot satellitaire 702 : (F₁, P₂),
- spot satellitaire 703 : (F₂, P₂),
- spot satellitaire 704 : (F₃, P₂),
- spot satellitaire 705 : (F₄, P₂),

Ces associations sont données à titre d'exemple seulement, le nombre de fréquences pouvant avantageusement être augmenté pour accroître la distance entre des spots satellitaires utilisant les mêmes ressources spectrales. Il est également possible d'attribuer des fréquences distinctes F1 à F5 à chaque des spots, dans la même polarisation.

La droite de la figure 7 représente un mode de réalisation de l'invention en cas de défaillance du spot satellitaire 701. Dans ce cas, l'allocateur de ressources est configuré pour étendre la surface couverte par les spots satellitaires 702 à 705 ayant des bords communs avec le spot 701, de manière à ce qu'ils recouvrent ensemble la totalité de la surface du spot satellitaire défaillant 701.

Cette extension de surface des spots se fait en deux étapes :
- la surface associée au spot satellitaire 701 est découpée en N sous-parties formées de manière à minimiser leur distance par rapport aux spots satellitaires adjacents, avec N le nombre de spots satellitaires adjacents. Dans la plupart des cas, et dans l'exemple de la figure 7, N est égal à 4, mais le nombre de sous-parties peut être inférieur sur les bords du réseau ;
- la surface des spots satellitaires adjacents au spot satellitaire défaillant est étendue de manière à couvrir la ou les sous-parties les plus proches.

Ainsi, en cas de défaillance de la chaîne d'amplification associée à un spot satellitaire, l'allocateur de ressource réalise une extension angulaire de la couverture des spots satellitaires adjacents en leur réallouant la zone géographique initialement couverte par le spot satellitaire défaillant. Ces spots suppléent alors à la liaison vers les terminaux satellitaires du spot défaillant. De nouvelles ressources spectrales leur sont donc allouées par l'allocateur de fréquence, en fonction de leurs positions. Ce principe garantit la continuité de couverture du satellite sans qu'il ne soit nécessaire de mettre en oeuvre des circuits de redondance dans le système antennaire.

L'utilisation d'un schéma de réutilisation des ressources spectrales à 8 couleurs ou plus permet de garantir l'absence d'interférences entre liaisons de spots satellitaires distincts, en particulier au point quadruple (centre du spot) de la zone initialement couverte par le spot satellitaire 701. L'invention s'applique cependant également pour un schéma de réutilisation des ressources spectrales à 4 couleurs, sous réserve que des sous-bandes de fréquences distinctes soient allouées aux zones recouvrant la surface du spot satellitaire 701 en cas de panne, afin d'éviter les interférences.

Il est possible de gérer les interférences en utilisant un schéma de réutilisation des ressources spectrales à 2 couleurs seulement, soit une bande de fréquence et deux états de polarisation orthogonaux. Ce mode de fonctionnement est décrit dans le brevet EP 3.082.275 B1, et peut être adapté à un réseau de radiocommunications satellitaires selon l'invention. Dans ce cas, une réserve spectrale d'environ 20% de la bande totale est allouée aux utilisateurs afin de gérer les interférences aux points quadruples des spots satellitaires.

Le même principe s'applique de manière équivalente dans le cas d'un réseau de spots satellitaires en forme de rectangles, tel qu'illustré à la figure 5, ou de losanges, tel qu'illustré à la figure 6b. Pour les losanges, la mise en oeuvre de l'invention est comparable à celle de la figure 7. Elle est illustrée à la figure 8, où la gauche de la figure représente le cas nominal où l'ensemble des spots satellitaires sont fonctionnels, et la droite de la figure le cas où le spot 801 est défaillant. Dans ce cas, les spots satellitaires adjacents 802 à 805 sont étendus de manière à recouvrir la surface que le spot 801 occupait. De nouvelles ressources spectrales sont alors allouées aux terminaux utilisateurs du spot 801 en fonction de leur position.

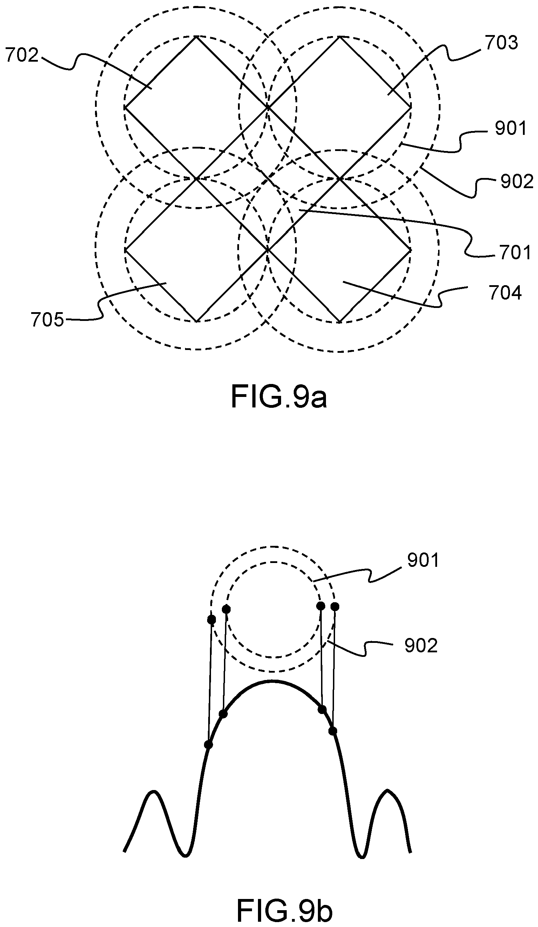

L'invention tire parti de ce que le flux de puissance rayonnée par les faisceaux éclairant les spots satellitaires ne s'arrête pas à la frontière des spots, en particulier lorsque les spots satellitaires ont des formes de quadrilatères. Le flux de puissance émis dans les spots adjacents peut être suffisant pour conserver une communication en cas de défaillance matérielle des chaînes d'amplifications du spot central. Les figures 9a et 9b illustrent ce principe sur la base d'un réseau de spots satellitaires organisés selon une maille carrée, comme à la figure 7. La courbe 901 représente l'iso-niveau de puissance du faisceau éclairant le spot satellitaire 703 au point quadruple. La courbe 902 représente l'iso niveau de puissance du faisceau éclairant le spot satellitaire 703 au centre du spot 701. La figure 9b donne un exemple de niveau de puissance émis par un faisceau satellitaire. On y voit que le niveau de puissance sur l'iso niveau 902 peut être proche du niveau de puissance sur l'iso niveau 901.

L'invention s'applique donc en particulier aux réseaux de spots satellitaires pour lesquels le flux de puissance émis dans les spots adjacents est suffisant pour pouvoir étendre les spots satellitaires sur une partie de ces spots. C'est le cas par exemple lorsque le réseau de spots satellitaires a une maille carrée avec une alternance de spots dans des polarisations croisées obtenues à partir d'un système antennaire comprenant deux antennes SFB ou systèmes antennaires SFB disposés en double grille maille carrée. Cette solution est plus difficilement envisageable pour les systèmes antennaires à une antenne SFB en maille carrée, car elle crée une contrainte au niveau des dimensions des cornets qui doivent être plus petits, ce qui entraine des pertes par débordement par manque de directivité. L'utilisation d'une ou plusieurs antennes MFB est particulièrement adaptée à cette mise en oeuvre, en particulier pour un réseau de spots satellitaires et une couverture par une maille en forme de quadrilatères, puisque ces antennes permettent de former des faisceaux ayant des niveaux de puissance importants sur les bords et aux points quadruples des quadrilatères. Cette solution permet en outre de densifier la couverture grâce à la réutilisation de proche en proche des éléments rayonnants.

Le réseau de radiocommunications satellitaires selon l'invention permet donc de répondre au problème d'indisponibilité des faisceaux, lié par exemple aux défaillances des chaînes RF d'amplification des signaux émis/reçus aux sources de l'antenne, tout en ayant une gestion optimale de la puissance consommée par le satellite et un réseau de spots satellitaires dense.

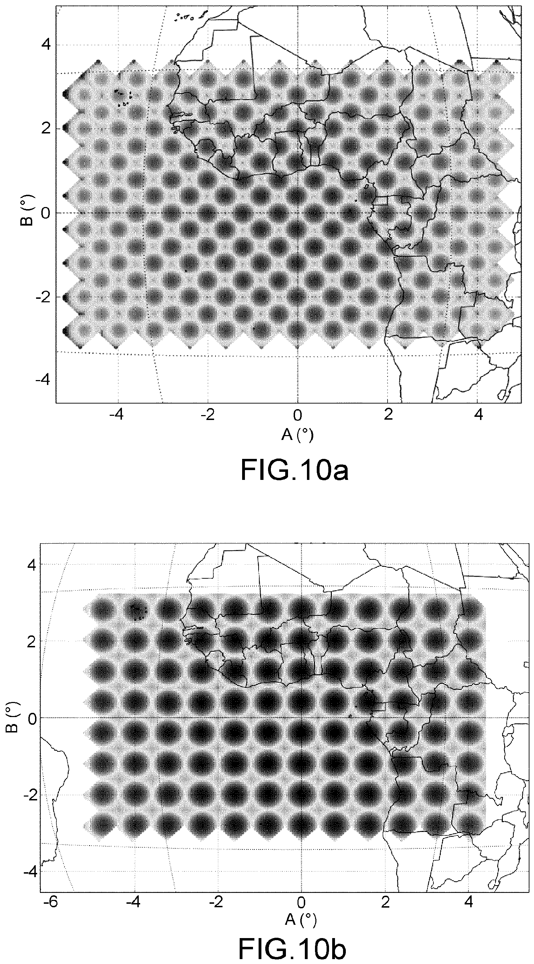

Les figures 10a et 10b illustrent une application concrète de la couverture d'une zone géographique dans réseau de radiocommunications satellitaires selon l'invention, pour un satellite disposant d'une antenne d'émission/réception passive multifaisceaux MFB à 192 accès (c'est-à-dire 192 chaînes RF). Chaque chaîne d'amplification de l'antenne est reliée à un quadruplet d'éléments rayonnants bipolarisation agencés selon une maille carrée, permettant de former un réseau de spots satellitaires selon une maille carrée avec une alternance de spots satellitaires associés à des polarisations croisées. Dans l'exemple, l'antenne forme une ouverture de faisceaux de 0,7°, avec un schéma de réutilisation des fréquences à 8 couleurs. Sur la figure 10a sont représentées en niveaux de gris les puissances disponibles dans les différentes mailles dans un cas de fonctionnement nominal, le noir correspondant au niveau de puissance maximale. Le niveau de directivité au milieu des mailles est légèrement supérieur à 47,2dB et la variation de gain de l'ordre de 3dB. La figure 10b représente la même zone géographique, dans un cas de fonctionnement dégradé où l'ensemble des spots satellitaires associés à une polarisation donnée sont défaillants. Pour chaque spot satellitaire défaillant, l'allocateur de ressources modifie la forme des spots satellitaires adjacents associés à la polarisation croisée, comme décrit précédemment, de manière à suppléer ce spot. On observe que la continuité de service de la zone géographique est assurée, même avec un taux de panne de 50%. Les mailles carrées ont une taille deux fois plus importante puisque chaque spot palie à la défaillance des quatre spots satellitaires environnants. Inévitablement, le niveau de puissance au niveau des spots satellitaires défaillants est légèrement réduit compte tenu du taux de panne.

Le système de radiocommunications satellitaire selon l'invention permet donc d'offrir une couverture géographique complète d'une zone géographique, même lorsque 50% des faisceaux sont hors service. Il permet de concevoir des antennes satellite ayant des sections Tx et Rx sans redondance, dans lesquels les circuits RF sont directement reliés aux sources de l'antenne à travers les circuits de distribution, ce qui permet de :
- supprimer les pertes ohmiques dues aux circuits de redondance,
- minimiser les longueurs de harnais,
- minimiser la masse de la charge utile,
- réduire les temps d'intégration et de vérification des chemins.

A titre d'illustration, une charge utile conventionnelle en bande Ka utilise généralement des amplificateurs TWTA pour maximiser les rendements d'amplification (rendement type de 48% en mode multiporteuses). Cependant, les pertes ohmiques liées à une architecture redondée après l'amplificateur de puissance sont typiquement de l'ordre de 2,5 dB. La section de sortie ainsi constituée présente un rendement de 27% à l'accès source.

La solution proposée permet de supprimer les circuits de redondance, et donc d'utiliser des amplificateurs SSPA plus petits, moins lourds, moins chers, avec des rendements réduits (rendement type de 33% en l'état de la technologie) positionnés suffisamment près des ouvertures rayonnantes pour limiter les pertes ohmiques à moins de 0,5 dB. La section de sortie ainsi constituée présente alors un rendement de 29% à l'accès source. Cette solution est donc meilleure que la solution conventionnelle pour une complexité et un poids bien inférieurs. La solution proposée peut aussi être associée à des amplificateurs TWTA pour offrir dans ce cas des rendements de 43% à l'accès source.

Le système de radiocommunications satellitaires selon l'invention utilise des technologies connues à bord du satellite. Les systèmes antennaires peuvent comprendre une ou plusieurs antennes passives multifaisceaux, réalisant conjointement ou séparément les fonctions d'émission et de réception. En bande Ka, la bande de fréquence autorisée pour les émissions (liaison descendante) est la bande [27,5 GHz - 31 GHz] tandis que la bande de fréquence autorisée pour les réceptions (liaison montante) est la bande [17,3 GHz - 21,2 GHz]. Le facteur de roll-off des faisceaux formés (c'est-à-dire la variation de gain dans le spot satellitaire, qui est fonction du diamètre réflecteur) est fonction de la longueur d'onde. Par exemple, l'angle θ_{3dB} correspondant à 3 dB de roll-off est égal à 70.λ/D, avec λ la longueur d'onde moyenne de la bande de fréquence envisagée, et D le diamètre du réflecteur. Ainsi, les sources et réflecteurs des antennes satellite réalisant simultanément émission et réception sont généralement dimensionnés par rapport aux contraintes de la liaison descendante, c'est-à-dire la longueur d'onde la plus basse. De ce fait, le roll-off des faisceaux utilisés pour la liaison montante est donc généralement trop fort. Différentier les systèmes antennaires d'émission et de réception permet de maîtriser le roll-off pour chacune des liaisons montante et descendante, et donc les niveaux de puissance émis, de manière à limiter les interférences pouvant se produire au centre des spots satellitaires défaillants lorsque le schéma de réutilisation des fréquences utilise un nombre peu élevé de sous-bandes de fréquence.

Selon les applications visées, le système de radiocommunications satellitaire selon l'invention peut ne s'appliquer qu'à un seul sens de la communication, les communications montantes ou les communications descendantes, ou aux deux sens de communication. Il est également possible d'avoir un système dissymétrique, comme par exemple en utilisant en émission un système antennaire comprenant deux antennes selon une configuration permettant de réaliser un pavage sous forme de losanges, et en réception un système antennaire comprenant une antenne selon une configuration permettant de réaliser un pavage sous forme de rectangles, l'angle solide des rectangles étant égal au double de l'angle solide des losanges. En effet, la mise en oeuvre d'une redondance dans les chaînes d'amplification étant plus simple en réception qu'en émission (car il n'y a pas de puissance en jeu), il est alors possible d'introduire des chaînes de redondance peu complexes dans la charge utile du système satellitaire.

Le système de radiocommunications satellitaire selon l'invention présente l'avantage d'être compatible avec tous les standards de communications par satellite, et ne nécessite pas de modifier les terminaux utilisateurs développés pour mettre en oeuvre ces standards.

Enfin, le système de radiocommunications satellitaire selon l'invention présente l'avantage d'être compatible avec la mise en oeuvre d'autres mécanismes, tel que par exemple le mécanisme de couplage de faisceaux (en anglais *beam coupling)* décrit dans la demande de brevet EP 3.503.430 A1, qui permet de répondre aux problématiques de couverture composites (en anglais *Beam Layout*) à partir de réseaux en configuration MFB réalisant des couvertures régulières. Le principe consiste à coupler des faisceaux de même taille via des circuits de distribution passifs, soit des faisceaux adjacents en contre polarisation, soit des faisceaux distants associés à une même sous-bande de fréquence et une même polarisation, afin de constituer des faisceaux équivalents dont l'angle solide est un multiple de l'angle solide des faisceaux élémentaires.

Pour un nombre d'accès répéteur donné, le couplage de faisceaux permet une optimisation simple et efficace de la distribution de la capacité sur une couverture inhomogène à partir d'un réseau réalisant une couverture régulière. Il permet également d'aller d'améliorer les performances des systèmes de radiocommunications satellitaires en directivité et en C/l (sigle anglais pour *Carrier to Interférence,* ou rapport signal sur interférence) par rapport aux systèmes conventionnels.

L'invention porte sur un système de radiocommunications satellitaires complet, comprenant satellite, antenne satellite, allocateur de ressources et terminal satellite, mais également sur l'allocateur lui-même dans un tel système, configuré pour palier à l'extinction éventuelle de faisceaux satellitaires en étendant la couverture des mailles adjacentes en contre polarisation. Enfin, elle porte sur un procédé d'allocation de ressources spectrales (bande de fréquence et polarisation) dans un système satellitaire multifaisceaux tel que décrit précédemment.

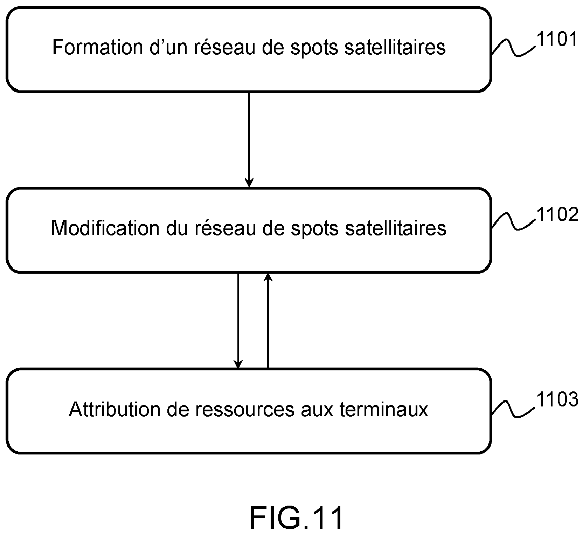

Le procédé d'allocation de ressources dans un réseau satellitaire selon un mode de réalisation de l'invention, dont les étapes sont représentées à la figure 11, comprend trois étapes :
- une étape initiale 1101, réalisée par l'allocateur de ressources 204, de formation d'un réseau de spots satellitaires agencés selon une maille régulière en forme de quadrilatère, par exemple carré, rectangle ou losange, puis d'association de ressources spectrales aux spots satellitaires. Les associations de ressources spectrales (couple bande de fréquence/polarisation) sont faites de sorte que des polarisations orthogonales soient assignées à des spots satellitaires adjacents, ou à défaut que pour chaque spot, des ressources fréquentielles distinctes soient attribuées au spot concerné et à ses quatre voisins. L'allocateur de ressources alloue ensuite des ressources spectrales à chaque terminal satellitaire du réseau, en fonction de sa position dans le réseau de spots satellitaires. Cette allocation de ressources spectrales est également réalisée à chaque entrée d'un terminal satellitaire dans le réseau. Cette étape peut être réalisée une seule fois à la mise en route du satellite, ou de manière régulière/à la demande afin d'adapter les allocations de ressources fréquentielles à la charge et aux déplacements éventuels des terminaux ;
- une étape 1102, réalisée par l'allocateur de ressources à chaque fois qu'un spot satellitaire (tel que le spot 701) est défaillant, d'extension de la zone de couverture des spots satellitaires adjacents (702, 703, 704 et 705) de manière couvrir la surface qu'il occupe. Cette étape permet d'assurer la continuité de la couverture de la zone de service en cas de panne du faisceau couvrant un spot satellitaire, tout en s'affranchissant de circuits de redondance ;
- une étape 1103, réalisée immédiatement à la suite de l'étape 1102, d'allocation de ressources spectrales aux terminaux satellitaires du spot satellitaire défaillant, en fonction de leur position et de la nouvelle configuration du réseau de mailles.

## Revendications

1. Système de radiocommunications satellitaire multifaisceaux comprenant :
- au moins un satellite (201) ayant au moins un système antennaire multifaisceaux passif,
- au moins un terminal satellitaire (205),
- un allocateur de ressources (204) configuré pour former un réseau régulier de spots satellitaires sur une zone géographique donnée, ledit réseau de spot satellitaire étant agencé selon une maille régulière en forme de quadrilatères, et pour associer des ressources spectrales aux spots satellitaires de sorte que pour chaque spot satellitaire, les ressources spectrales qui lui sont attribuées diffèrent de celles attribuées aux spots satellitaires adjacents, puis pour allouer des ressources spectrales audit au moins un terminal satellitaire en fonction de sa position dans ledit réseau de spots satellitaires,
le système de radiocommunications satellitaires étant **caractérisé en ce que** l'allocateur de ressources est configuré pour, en cas de défaillance d'un spot satellitaire (701), étendre la zone de couverture des spots satellitaires (702, 703, 704, 705) adjacents au spot satellitaire défaillant de manière couvrir la surface qu'il occupe, et allouer de nouvelles ressources spectrales aux terminaux satellites du spot satellitaire défaillant en fonction de leur position.

2. Système de radiocommunications satellitaire multifaisceaux selon la revendication 1, dans lequel des polarisations orthogonales sont associées à des spots satellitaires adjacents.

3. Système de radiocommunications satellitaire multifaisceaux selon l'une des revendications précédentes, dans lequel l'extension de la zone de couverture des spots satellitaires (702, 703, 704, 705) adjacents au spot satellitaire défaillant (701) comprend :
- une découpe de la surface (701) du spot satellitaire défaillant en N sous-parties formées de manière à minimiser la distance par rapport aux spots satellitaires adjacents, avec N le nombre de spots satellitaires adjacents au spot satellitaire défaillant,
- une extension de la surface des spots satellitaires (702, 703, 704, 705) adjacents au spot satellitaire défaillant, de manière à couvrir la sous-partie la plus proche.

4. Système de radiocommunications satellitaire multifaisceaux selon l'une des revendications précédentes, dans lequel le satellite comprend un système antennaire configuré pour assurer une fonction d'émission vers le ou les terminaux satellitaires, un système antennaire configuré pour assurer une fonction de réception depuis le ou les terminaux satellitaires, un système antennaire configuré pour assurer une fonction d'émission/réception avec le ou les terminaux satellitaires, ou un premier système antennaire (111, 112, 113, 114, 115) configuré pour assurer une fonction d'émission vers le ou les terminaux satellitaires et un second système antennaire (121, 122, 123, 124, 125) configuré pour assurer une fonction de réception depuis le ou les terminaux satellitaires.

5. Système de radiocommunications satellitaire multifaisceaux selon l'une des revendications précédentes, dans lequel au moins une des antennes du système satellitaire est une antenne multi faisceaux où chaque faisceau est formé par une pluralité d'éléments rayonnants, dite antenne MFB.

6. Système de radiocommunications satellitaire multifaisceaux selon la revendication 5, dans lequel les éléments rayonnants de la ou des antennes MFB sont configurés pour permettre la transmission simultanée de signaux polarisés dans deux polarisations orthogonales, reliés par groupes à des sources radiofréquences de manière à ce que chaque groupe d'éléments rayonnants forme un faisceau satellitaire.

7. Système de radiocommunications satellitaire multifaisceaux selon l'une des revendications 5 et 6, dans laquelle des groupes d'éléments rayonnants formant des faisceaux de spots satellitaires adjacents en polarisation croisée (1101, 1102) ou des faisceaux de spots satellitaires distants associés à une même bande de fréquence et même polarisation (1101, 1103, 1104) sont reliés par des circuits de distribution passifs.

8. Système de radiocommunications satellitaire multifaisceaux selon l'une des revendications précédentes, dans lequel au moins un des systèmes satellitaires comprend une pluralité d'antennes.

9. Système de radiocommunications satellitaire multifaisceaux selon l'une des revendications précédentes, et comprenant au moins deux satellites (201) ayant chacun au moins un système antennaire multifaisceaux passif, dans lequel ladite zone géographique est couverte par un premier système antennaire embarqué dans un premier satellite parmi lesdits au moins deux satellites, et par un deuxième système antennaire embarqué dans un deuxième satellite parmi lesdits au moins deux satellites.

10. Système de radiocommunications satellitaire multifaisceaux selon l'une des revendications précédentes, dans lequel la maille du réseau de spots satellitaires est de forme carrée (304), rectangulaire (506) ou losange (611).

11. Système de radiocommunications satellitaire multifaisceaux selon l'une des revendications précédentes dans lequel ledit au moins un système antennaire multifaisceaux du satellite comprend une antenne dont les sources sont reliées à des éléments rayonnants à travers des circuits de distribution sans mise en oeuvre de circuits de redondance.

12. Procédé d'allocation de ressources satellitaires, par un allocateur de ressources (204) dans un réseau de radiocommunications satellitaire comprenant au moins un terminal satellitaire (205) et au moins un satellite (201), ledit satellite ayant au moins un système antennaire multifaisceaux passif configuré pour couvrir une zone géographique donnée, ledit procédé étant **caractérisé en ce qu'**il comprend :
- une étape initiale (1101) de formation d'un réseau de spots satellitaires agencés selon une maille régulière en forme de quadrilatère, d'association de ressources spectrales auxdits spots satellitaires de sorte que pour chaque spot satellitaire, les ressources spectrales qui lui sont attribuées diffèrent de celles attribuées aux spots satellitaires adjacents, et d'allocation de ressources spectrales audit au moins un terminal satellitaire en fonction de sa position dans le réseau de spots satellitaires,
- une étape (1102) réalisée lorsqu'un spot satellitaire (701) est défaillant, d'extension de la zone de couverture des spots satellitaires (702, 703, 704, 705) adjacents au spot satellitaire défaillant de manière couvrir la surface qu'il occupe, et
- une étape (1103) d'allocation de nouvelles ressources spectrales aux terminaux satellitaires du spot satellitaire défaillant en fonction de leur position.

13. Allocateur de ressources (204), dans un réseau de radiocommunications satellitaire comprenant au moins un terminal satellitaire (205) et au moins un satellite (201), ledit satellite ayant au moins un système antennaire multifaisceaux passif configuré pour couvrir une zone géographique donnée, **caractérisé en ce qu'**il est configuré pour mettre en oeuvre un procédé d'allocation de ressources satellitaires selon la revendication précédente.
